# EUROPÄISCHE PATENTANMELDUNG

(11) **EP 1 717 501 A1**
(43) Veröffentlichungstag der Anmeldung: **02.11.2006**
(21) Anmeldenummer: 05009340.0
(22) Anmeldetag: 28.04.2005
(51) Int. Cl.: F16K 39/02

(54) **Ventil**

(71) Anmelder: Carl Freudenberg KG, 69469 Weinheim (DE)
(72) Erfinder: Gerlich, Torsten, Dr., 64625 Bensheim (DE); Daume, Volker, 69434 Hirschhorn (DE); Bittner, Jörg, 69514 Laudenbach (DE); Hanel, Guido, 41472 Neuss (DE); Tinz, Reinhard, 64401 Gross-Bieberau (DE)

(57) **Zusammenfassung**

Ein Ventil, umfassend ein Gehäuse (1) mit einem Einlass (2), einem Auslass (3) und einem mittels einer Betätigungseinrichtung bewegbaren Stellglied (4), durch welches der Einlass (2) und der Auslass (3) strömungsverbindbar sind, wobei dem Stellglied (4) mit Druck beaufschlagbare Wirkflächen (5, 6) und Dichtbereiche (7, 8) zuordenbar sind und wobei das Stellglied (4) als Leitung ausgestaltet ist, ist im Hinblick auf die Aufgabe, eine einwandfreie Funktionsfähigkeit auch nach längerer Betriebsdauer zu gewährleisten. dadurch gekennzeichnet, dass den Dichtbereichen (7, 8) Dichtelemente (9, 10) zugeordnet sind, die stellgliedseitig oder gehäuseseitig angeordnet und dabei entweder vom Gehäuse (1) oder vom Stellglied (4) entkoppelt sind.

## Beschreibung

### Technisches Gebiet

Die Erfindung betrifft ein Ventil, umfassend ein Gehäuse mit einem Einlass, einem Auslass und einem mittels einer Betätigungseinrichtung bewegbaren Stellglied, durch welches der Einlass und der Auslass strömungsverbindbar sind, wobei dem Stellglied mit Druck beaufschlagbare Wirkflächen und Dichtbereiche zuordenbar sind und wobei das Stellglied als Leitung ausgestaltet ist.

### Stand der Technik

Ventile der Eingangs genannten Art sind aus dem Stand der Technik bereits bekannt. Die mit Druck beaufschlagbaren Wirkflächen sind häufig derart dimensioniert, dass sich an ihnen angreifende Drücke kompensieren. Hierdurch ist das Stellglied durch eine Betätigungseinrichtung bewegbar, ohne Druckkräfte zu überwinden. Solche Ventile finden in Verbrennungsmotoren Anwendung, wo sie dem dosierten Einspeisen flüchtiger Kraftstoffbestandteile in das Ansaugsystem des Motors dienen. Insbesondere finden sie bei der Regenerierung von Abgasen Verwendung.

Aus der DE 102 48 125 A1 ist ein gattungsgemäßes Ventil bekannt, welches druckkompensierbar ausgestaltet ist. Dem Stellglied ist ein Dichtbereich zugeordnet, welcher eine Membran umfasst. Die Membran bildet zusammen mit dem bewegbaren Stellglied eine Wirkfläche, welche mit Druck beaufschlagbar ist. Die Membran ist einerseits dem Stellglied und andererseits dem Gehäuse zugeordnet, sodass diese dem bewegten Stellglied zumindest abschnittsweise folgt. Hierbei wird das Membranmaterial dynamischen Belastungen ausgesetzt. Die Membran begrenzt ein Volumen innerhalb einer Ausgleichskammer, welches bei Bewegung der Membran in seiner Geometrie verändert wird. Insbesondere bei schneller Bewegung des Stellglieds können innerhalb dieses Volumens Druckspitzen entstehen, wodurch einerseits das Membranmaterial belastet und andererseits die Bewegung des Stellglieds gehemmt werden kann.

In Verbrennungsmotoren entstehen so genannte "blow-by"-Gase, welche mit den Bauteilen der im Verbrennungsmotor eingesetzten Ventile in Kontakt treten. Hierdurch treten Verschmutzungen und chemische Angriffe auf, welche die Bauteile eines Ventils erheblich schädigen können. Das mit einer Membran ausgestaltete gattungsbildende Ventil kann Betriebstemperaturen bis zu 200°C und Betriebsdrücken bis zu 2 bar ausgesetzt sein. Die üblicherweise aus einem Elastomer gefertigte Membran wird bei diesem Stellglied in vielerlei Hinsicht belastet. Die Belastungen entstehen durch hohe Betriebstemperaturen, durch Betriebsdrücke, durch "blow-by"-Gase und damit einhergehender Verschmutzung und chemische Angriffe sowie durch Bewegung des Stellglieds.

Nach einer gewissen Betriebsdauer können bei der Membran zumindest abschnittsweise Bereiche entstehen, die durch Materialermüdung zum Brechen oder Reißen neigen. Insoweit weist das gattungsbildende Ventil im Hinblick auf seine Gebrauchstauglichkeit erhebliche Nachteile auf.

### Darstellung der Erfindung

Der Erfindung liegt daher die Aufgabe zugrunde, ein Ventil der eingangs genannten Art derart auszugestalten und weiter zu bilden, dass eine einwandfreie Funktionsfähigkeit auch nach längerer Betriebsdauer gewährleistet ist.

Erfindungsgemäß wird die voranstehende Aufgabe mit den Merkmalen des Patentanspruchs 1 gelöst.

Danach ist ein Ventil der eingangs genannten Art dadurch gekennzeichnet, dass den Dichtbereichen Dichtelemente zugeordnet sind, die stellgliedseitig oder gehäuseseitig angeordnet und dabei entweder vom Gehäuse oder vom Stellglied entkoppelt sind.

In erfindungsgemäßer Weise ist zunächst erkannt worden, dass ein Dichtelement, welches sowohl dem Gehäuse als auch dem Stellglied zugeordnet ist, bei Bewegung des Stellglieds eine erhebliche Materialbeanspruchung erfährt. In einem nächsten Schritt ist sodann erkannt worden, dass eine Entkopplung des Dichtelements entweder vom Gehäuse oder vom Stellglied das Material des Dichtelements bei Bewegung des Stellglieds entlastet. Schließlich ist in einem dritten Schritt erkannt worden, dass die Dichtelemente entweder dem Gehäuse allein oder allein dem Stellglied zuordenbar sind, ohne die Funktionsfähigkeit des Ventils zu beeinträchtigen. Da das Material, aus dem die Dichtelemente gefertigt sind, bei Bewegung des Stellglieds nicht dynamisch beansprucht wird, ist deren Lebensdauer erheblich erhöht. Insoweit sind Fehler des Ventils durch Materialermüdung weitgehend vermieden. Folglich ist eine einwandfreie Funktionsfähigkeit auch nach längerer Betriebsdauer gewährleistet. Daher ist die eingangs genannte Aufgabe gelöst.

In besonders vorteilhafter Weise könnte mindestens ein Dichtelement ausschließlich stellgliedseitig und mindestens ein weiteres Dichtelement ausschließlich gehäuseseitig angeordnet sein. Ganz in Abhängigkeit von den baulichen Gegebenheiten des Ventils ist es denkbar, dass unterschiedliche Dichtelemente unterschiedlichen Bereichen des Ventils zugeordnet sind. Insoweit erlaubt diese Ausgestaltung eine problemlose Anpassung der Dichtelementeanordnung an spezifische bauliche Gegebenheiten.

Die Dichtelemente könnten als statische Dichtungen fungieren. Vor diesem Hintergrund ist denkbar, dass die Dichtungen ihre Dichtungswirkung nur im Ruhezustand des Stellglieds entfalten. Durch diese Ausgestaltung ist sicher gestellt, dass die Dichtelemente im Bewegungszustand des Stellglieds keine Dichtwirkung und im Ruhezustand des Stellglieds ihre Dichtwirkung voll entfalten. Hierdurch ist eine Materialbeanspruchung der Dichtelemente minimiert. Die Dichtungen könnten des Weiteren an flach ausgebildeten Gehäuseflächen anliegen. Hierdurch sind Verkantungen oder Verklemmungen ausgeschlossen und das Dichtungsmaterial wird geschont.

Die Dichtelemente könnten O-Ringe umfassen. Die Verwendung von O-Ringen erlaubt eine kostengünstige Fertigung des Ventils, da O-Ringe kommerziell problemlos erhältlich sind. Die Dichtelemente könnten vor diesem Hintergund auch als Nutringe ausgestaltet sein oder weitere Formdichtungen umfassen. Denkbar ist auch, dass die Dichtelemente als Radialdichtringe ausgestaltet sind und relativ zueinander bewegliche Bauelemente dynamisch abdichten. Dabei kann ein Dichtelement ausschließlich einem beweglichen Bauteil derart zugeordnet sein, dass es mit diesem Bauteil zusammen beweglich ist.

Die Dichtelemente könnten Dichtlippen umfassen. Vor diesem Hintergrund ist denkbar, dass die Dichtlippen entweder dem Stellglied zugeordnet sind und sich mit diesem bewegen oder ausschließlich am Gehäuse angeordnet sind und sich das Stellglied an diese anlegt. Die Verwendung von Dichtlippen erlaubt die Kompensierung gewisser Unebenheiten und eines gewissen Spiels des Stellglieds, da sich diese elastisch an die Dichtbereiche unter Ausgleich undichter Stellen anpassen.

Je nach ihrer geometrischen Ausgestaltung sind Dichtlippen leicht biegbar oder deformierbar, sodass diese schon bei geringstem Anpressdruck eine zufrieden stellende Dichtigkeit bewirken. Die Dichtelemente könnten durch eine Klipsverbindung anordenbar sein. Diese Ausgestaltung erlaubt das schnelle Auswechseln verbrauchter Dichtelemente. Vor diesem Hintergrund ist denkbar, die Dichtelemente durch einen Bajonett-Verschluss oder Rast-Verschluss am Stellglied oder am Gehäuse zu befestigen.

Die Dichtelemente könnten Elastomerverbundteile umfassen. Diese Ausgestaltung hat den Vorteil, dass die Dichtelemente im Hinblick auf ihre Steifigkeit bzw. Ihre Dichtungshärte einstellbar sind.

Die Dimensionierung der Dichtelemente könnte die Größe der Wirkflächen bestimmen. Hierbei ist denkbar, dass die dem Druckmedium zugewandte Seite der Dichtelemente die Wirkfläche als solche bildet. Denkbar ist jedoch auch, dass die dem Druckmedium zugewandte Seite der Dichtelemente zusammen mit einer flächigen Ausbildung des Stellglieds die Größe der effektiv wirkenden Wirkfläche bestimmt. Diese Ausgestaltung erlaubt vorteilhaft die Abstimmung der Größe der Wirkfläche, sodass, das Ventil schließverstärkend oder öffnungsverstärkend ausgestaltet werden kann. Bei schließverstärkender Ausgestaltung wird eine Wirkfläche so gewählt, dass ein Druckmedium das Stellglied stärker in eine Schließstellung presst, als dieses durch ein Druckmedium in entgegen gesetzter Richtung gedrückt wird. In analoger Weise, jedoch in umgekehrtem Sinne ist eine öffnungsverstärkende Ausgestaltung des Ventils ausgeführt.

Die Dimensionierung der Dichtelemente könnte variabel einstellbar sein. Diese konkrete Ausgestaltung erlaubt ein problemloses Verändern eines Ventils, welches schließverstärkend ausgebildet ist, in ein Ventil, welches öffnungsverstärkend ausgebildet ist.

Der Umfang eines Dichtelements könnte die Größe der Wirkflächen bestimmen. Vor diesem Hintergrund ist denkbar, dass die Dichtelemente eine Ringfläche bilden, welche vom Druckmedium beaufschlagbar ist. Denkbar ist eine Ausgestaltung derart, dass die Summe mehrerer Wirkflächen eines druckbeaufschlagten ersten Bereichs gleich der Summe der Wirkflächen eines zweiten entgegengesetzt druckbeaufschlagten Bereichs ist. Hierdurch ist das Ventil bei Auswahl günstiger Wirkflächengeometrien an unterschiedliche Einbausituationen anpassbar.

Das Stellglied könnte als rotationssymmetrischer Körper ausgebildet sein. Diese Ausgestaltung erlaubt eine problemlose und kostengünstige Fertigung des Stellglieds. Des Weiteren unterliegen das Stellglied sowie die diesem zugeordneten Bauteile einer gleichmäßigen Materialbeanspruchung.

Das Stellglied könnte axial bewegbar sein. Vor diesem Hintergrund ist denkbar, dass das Stellglied in Richtung seiner Symmetrieachse bewegbar ist. Diese konstruktive Ausgestaltung erlaubt eine problemlose Fertigung des das Stellglied aufnehmenden Gehäuses, da eine translatorische Bewegung des Stellglieds ohne großen Fertigungsaufwand realisierbar ist.

Das Stellglied könnte innerhalb eines Gehäuses mindestens zwei Kammern gegeneinander abdichten. Dabei könnte eine von diesen Kammern oder eine dritte Kammer als Ausgleichskammer fungieren, in welche das Stellglied bei Betätigung verfahrbar ist. Die Ausgleichskammer könnte fluiddicht verschließbar, starr und volumenkonstant sein. Diese konkrete Ausgestaltung gesnrährleistet eine besondere Dichtheit des gesamten Ventils und einen Aufbau, welcher das Dichtungsmaterial schont, da auf Membranbälge oder ähnliches verzichtet werden kann.

Die Dichtelemente könnten das Stellglied umfänglich umgeben. Hierdurch ist sicher gestellt, dass ein Durchgang, durch welchen das Stellglied hindurchführbar ist, zuverlässig abdichtbar ist.

Das Stellglied könnte durch eine Führungseinrichtung definiert bewegbar sein. Vorteilhaft realisiert diese Ausgestaltung ein Bewegen des Stellglieds mit definiertem Spiel. Insoweit sind Verkantungen oder Verklemmungen des Stellglieds wirksam vermieden, sodass eine einwandfreie Funktionsfähigkeit des Ventils gegeben ist. Die Führungseinrichtung könnte eine Führungsstange umfassen. Vor diesem Hintergrund ist denkbar, dass das Stellglied eine zentrale Bohrung aufweist, durch welche die Stange geführt ist. Diese konstruktive Ausgestaltung erlaubt eine besonders stabile Führung des Stellglieds mit definiertem Spiel bei robustem Aufbau.

Die Führungseinrichtung könnte auch eine Schienenanordnung umfassen. Dabei ist denkbar, dass in das Gehäuse Nuten oder Auskragungen eingeprägt sind, welche komplementär zu Auskragungen bzw. Nuten des Stellglieds ausgebildet sind. Diese konkrete Ausgestaltung erlaubt nicht nur ein Bewegen des Stellglieds mit definiertem Spiel sondern verhindert auch eine axiale Verdrehung des Stellglieds relativ zum Gehäuse. Insoweit ist eine Führung mit definiertem Spiel sowohl in translatorischer als auch in rotatorischer Hinsicht sicher gestellt.

Das Stellglied könnte durch eine Feder unter Vorspannung gegen die Dichtbereiche pressbar sein. Die Vorkehrung einer Feder stellt ein kostengünstiges Mittel dar, welches sicher stellt, dass die Dichtelemente derart mit Kraft beaufschlagt werden, dass sie ihre Dichtungswirkung in zufrieden stellendem Maße entfalten können. Ganz in Abhängigkeit vom Material, aus dem die Dichtelemente gefertigt sind, kann die Federkonstante der Feder gewählt werden. Bei Verwendung eines leicht deformierbaren und weichen Materials für die Dichtelemente kann eine Feder verwendet werden, welche das Stellglied nur mit ganz geringer Kraft gegen die Dichtbereiche drückt. Bei Verwendung eines harten Materials für die Dichtelemente könnte die Feder eine große Federkonstante aufweisen und dementsprechend das Stellglied mit großer Kraft gegen die Dichtbereiche pressen.

Die Betätigungseinrichtung könnte elektromagnetisch arbeiten. Die Verwendung einer elektromagnetischen Betätigungseinrichtung erlaubt die Realisierung sehr geringer Ansprechzeiten für das Stellglied, sodass eine rasche Taktung des Ventils problemlos realisierbar ist. Vor diesem Hintergrund ist auch denkbar, die Betätigungseinrichtung pneumatisch auszugestalten.

Die elektromagnetisch arbeitende Betätigungseinrichtung könnte einen innenund/ oder außengeführten Anker und eine diesen konzentrisch umgebende elektrische Spule umfassen. Dieser konstruktive Aufbau zeichnet sich durch eine geringe Störanfälligkeit und problemlose Kraftübertragung auf den Anker aus- Der Anker ist bei dieser konstruktiven Ausgestaltung mit dem Stellglied verbunden und zusammen mit diesem bewegbar.

Das Gehäuse könnte einen Deckel umfassen, welcher eine diesen radial umgebende Dichtung umfasst. Die Vorkehrung einer solchen Dichtung erlaubt die problemlose Integrierung des Ventils in ein Verdichtergehäuse, beispielsweise eines Abgastuboladers, innerhalb eines Verbrennungsmotors eines Kraftfahrzeugs. Die radiale Dichtung stellt sicher, dass das Verdichtergehäuse an der Verbindungsstelle mit dem Ventil zuverlässig abgedichtet ist. Denkbar ist auch eine Verwendung in der Motorperipherie bei äquivalenter Wirkungsweise.

Möglich ist des Weiteren die Verwendung eines Ventils der hier beschriebenen Art auf der Kaltseite eines Turboladers eines Otto-Motors. Das Ventil könnte dabei als druckkompensiertes Schubumluftventil für förderbare Medien fungieren. Das hier beschriebene Ventil ist für diese Verwendung besonders geeignet, da es sich durch eine hervorragende Medienresistenz auszeichnet und hohen Drücken Stand hält. Das Ventil kann auch unter ungünstigen Betriebsbedingungen wie hohen Drücken und hohen Temperaturen seine Funktion erfüllen.

Es gibt nun verschiedene Möglichkeiten, die Lehre der vorliegenden Erfindung auf vorteilhafte Weise aus zu gestalten und weiter zu bilden. Dazu ist einerseits auf die dem Patentanspruch 1 nachgeordneten Ansprüche, andererseits auf die nachfolgende Erläuterung bevorzugter Ausführungsbeispiele der Erfindung anhand der Zeichnung zu verweisen. In Verbindung der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: ein Ventil, bei dem die Dichtelemente O-Ringe umfassen,
- Fig. 2: ein Ventil, bei dem die Dichtelemente Dichtlippen umfassen, und
- Fig. 3: ein Ventil, bei dem die Dichtelemente mit einer Klipsverbindung angeordnet sind.

### Ausführung der Erfindung

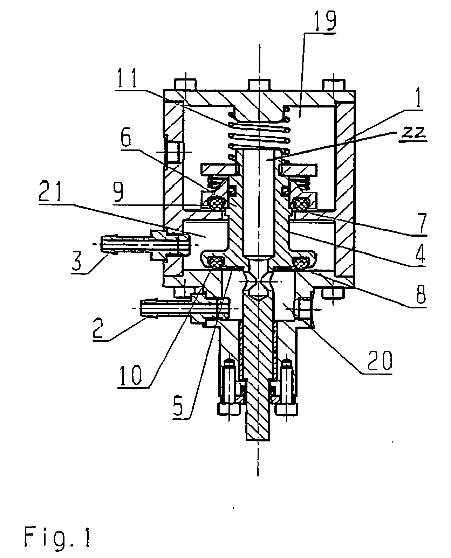

Fig. 1 zeigt in einer Schnittzeichnung ein Ventil, mit einem Gehäuse 1, einem Einlass 2 und einem Auslass 3. Das Stellglied 4 ist durch eine Betätigungseinrichtung bewegbar, sodass der Einlass 2 und der Auslass 3 strömungsverbunden oder strömungsgetrennt werden. Das Stellglied 4 umfasst druckbeaufschlagbare Wirkflächen 5 und 6, denen Dichtbereiche 7 und 8 zugeordnet sind. Die Wirkflächen 5 und 6 werden mit dem gleichen Druck beaufschlagt, da das Stellglied 4 als Leitung mit einem konzentrischen Durchgang 22 ausgebildet ist und ein fluidische Verbindung zweier Kammern 19, 20 ermöglicht. Die Dichtbereiche 7, 8 umfassen Dichtelemente 9 und 10. Diese sind ausschließlich stellgliedseitig angeordnet und vom Gehäuse entkoppelt. Die Dichtelemente 9 und 10 sind in ihrer Gesamtheit zusammen mit dem Stellglied bewegbar.

Die Dichtelemente 9, 10 fungieren als statische Dichtelemente und sind als O-Ringe ausgestaltet, die an flach ausgebildeten Gehäuseflächen anliegen.

Das Stellglied 4 ist als rotationssymmetrischer Körper ausgebildet, welcher axial bewegbar ist. Die Dichtelemente 9, 10 umgeben das Stellglied 4 umfänglich. Das Stellglied 4 wird durch eine Feder 11 unter Vorspannung gegen die Dichtbereiche 7, 8 gepresst.

Das Stellglied 4 ist in eine Ausgleichkammer 19 verfahrbar, in welcher die Feder 11 angeordnet ist. Die Ausgleichkammer 19 ist starr und volumenkonstant. Das Stellglied 4 dichtet die Ausgleichkammer 19 gegen die mit dem Auslass 3 verbundene Kammer 21 ab. Des Weiteren dichtet das Stellglied 4 die mit dem Einlass 2 verbundene Kammer 20 gegen die mit dem Auslass 3 verbundene Kammer 21 ab. Die mit dem Einlass 2 verbundene Kammer 20 ist durch das als Leitung ausgebildete Stellglied 4 mit der Ausgleichkammer 19 strömungsverbunden.

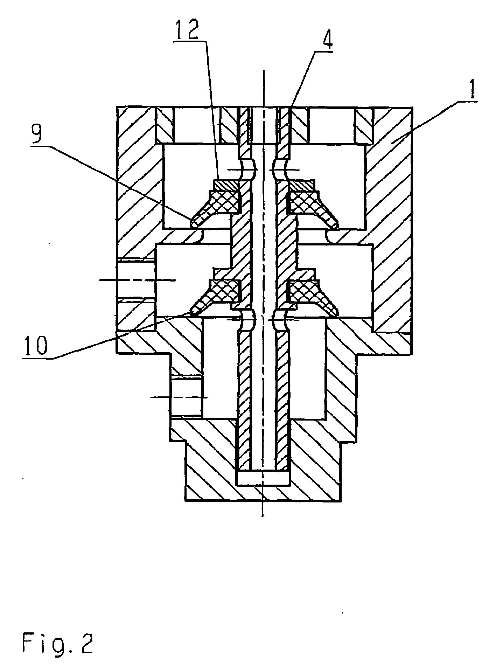

Fig. 2 zeigt ein Ventil, bei dem die Dichtelemente 9, 10 als Dichtlippen ausgestaltet sind und an flachen Gehäuseflächen anliegen. Die Dichtelemente 9, 10 bestimmen zusammen mit dem Bereich 12 eine Wirkfläche des Stellglieds 4. Die Dichtlippen sind kegelstumpfförmig ausgebildet.

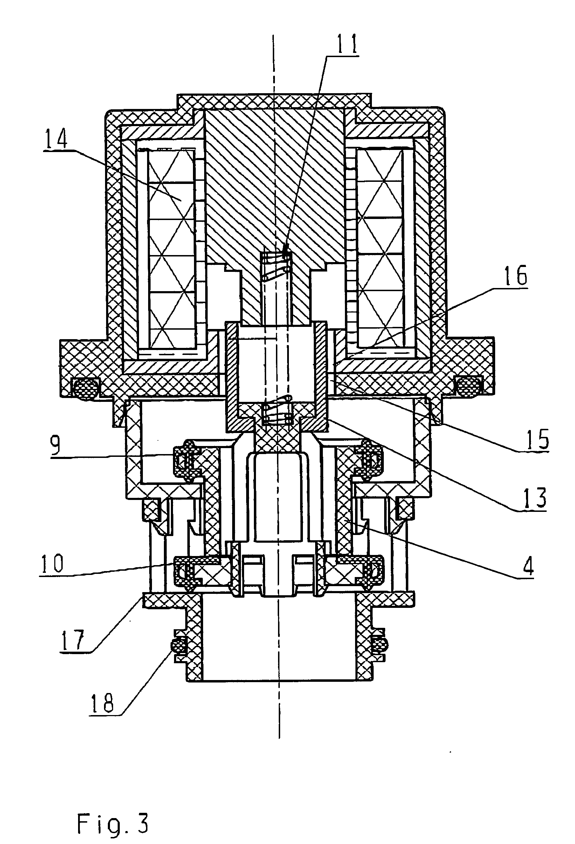

Fig. 3 zeigt ein Ventil, bei dem die Dichtelemente 9, 10 durch eine Klipsverbindung am Stellglied 4 angeordnet sind.

Dem Stellglied 4 ist ein Anker 13 zugeordnet, welcher mit einer diesen konzentrisch umgebenden Spule 14 und einer Feder 11 in Wirkverbindung steht. Bei strombeaufschlagung der Spule 14 wird eine magnetische Kraft erzeugt, welche den Anker 13 zusammen mit dem Stellglied 4 bewegt.

Das Stellglied 4 ist durch eine Führungseinrichtung 15 definiert bewegbar. Dabei umfasst die Führungseinrichtung 15 den Anker 13 und eine Ausnehmung 16 im Gehäuse 1.

Dem Gehäuse 1 ist ein Deckel 17 zugeordnet, welcher eine den Deckel 17 radial umgebende Dichtung 18 umfasst.

Das Stellglied 4 in den Fig. 1 bis 3 ist als rotationssymmetrischer Körper ausgebildet und axial bewegbar. Die Dichtelemente 9, 10 umgeben das Stellglied 4 umfänglich.

Hinsichtlich weiterer vorteilhafter Ausgestaltungen und Weiterbildungen der erfindungsgemäßen Lehre wird einerseits auf den allgemeinen Teil der Beschreibung und andererseits auf die Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränkt.

## Patentansprüche

1. Ventil, umfassend ein Gehäuse (1) mit einem Einlass (2), einem Auslass (3) und einem mittels einer Betätigungseinrichtung bewegbaren Stellglied (4), durch welches der Einlass (2) und der Auslass (3) strömungsverbindbar sind, wobei dem Stellglied (4) mit Druck beaufschlagbare Wirkflächen (5, 6) und Dichtbereiche (7, 8) zuordenbar sind und wobei das Stellglied (4) als Leitung ausgestaltet ist,
**dadurch gekennzeichnet, dass** den Dichtbereichen (7, 8) Dichtelemente (9, 10) zugeordnet sind, die stellgliedseitig oder gehäuseseitig angeordnet und dabei entweder vom Gehäuse (1) oder vom Stellglied (4) entkoppelt sind.

2. Ventil nach Anspruch 1, **dadurch gekennzeichnet, dass** mindestens ein Dichtelement (9, 10) ausschließlich stellgliedseitig und mindestens ein weiteres Dichtelement (9, 10) ausschließlich gehäuseseitig angeordnet ist.

3. Ventil nach Anspruch 1 oder 2, **dadurch gekennzeichnet, dass** die Dichtelemente (9, 10) als statische Dichtungen fungieren.

4. Ventil nach einem der Ansprüche 1 bis 3, **dadurch gekennzeichnet, dass** die Dichtelemente (9, 10) O-Ringe umfassen.

5. Ventil nach einem der Ansprüche 1 bis 4, **dadurch gekennzeichnet, dass** die Dichtelemente (9, 10) Dichtlippen umfassen.

6. Ventil nach einem der Ansprüche 1 bis 5, **dadurch gekennzeichnet, dass** die Dichtelemente (9, 10) durch eine Klipsverbindung anordenbar sind.

7. Ventil nach einem der Ansprüche 1 bis 6, **dadurch gekennzeichnet, dass** die Dichtelemente (9, 10) Elastomerverbundteile umfassen.

8. Ventil nach einem der Ansprüche 1 bis 7, **dadurch gekennzeichnet, dass** die Dimensionierung der Dichtelemente (9, 10) die Größe der Wirkflächen (6) bestimmt.

9. Ventil nach Anspruch 8, **dadurch gekennzeichnet, dass** die Dimensionierung der Dichtelemente (9, 10) variabel einstellbar ist.

10. Ventil nach Anspruch 8 oder 9, **dadurch gekennzeichnet, dass** der Umfang eines Dichtelements (9, 10) die Größe der Wirkfläche (6) bestimmt.

11. Ventil nach einem der Ansprüche 1 bis 10, **dadurch gekennzeichnet, dass** das Stellglied (4) als rotationssymmetrischer Körper ausgebildet ist.

12. Ventil nach Anspruch 11, **dadurch gekennzeichnet, dass** das Stellglied (4) axial bewegbar ist.

13. Ventil nach einem der Ansprüche 1 bis 12, **dadurch gekennzeichnet, dass** das Stellglied (4) in eine Ausgleichkammer (19) verfahrbar ist.

14. Ventil nach einem der Ansprüch 11 bis 13, **dadurch gekennzeichnet, dass** die Dichtelemente (9, 10) das Stellglied (4) umfänglich umgeben.

15. Ventil nach einem der Ansprüche 1 bis 14, **dadurch gekennzeichnet, dass** das Stellglied (4) durch eine Führungseinrichtung (15) definiert bewegbar ist.

16. Ventil nach Anspruch 15, **dadurch gekennzeichnet, dass** die Führungseinrichtung (15) eine Führungsstange umfasst.

17. Ventil nach Anspruch 15 oder 16, **dadurch gekennzeichnet, dass** die Führungseinrichtung (15) eine Schienenanordnung umfasst.

18. Ventil nach einem der Ansprüche 1 bis 17, **dadurch gekennzeichnet, dass** das Stellglied (4) durch eine Feder (11) unter Vorspannung gegen die Dichtbereiche (7, 8) pressbar ist.

19. Ventil nach einem der Ansprüche 1 bis 18, **gekennzeichnet durch** eine elektromagnetische Betätigungseinrichtung.

20. Ventil nach Anspruch 19, **dadurch gekennzeichnet, dass** die Betätigungseinrichtung einen innen- und/ oder außengeführten Anker (13) und eine diesen konzentrisch umgebende elektrische Spule (14) umfasst.

21. Ventil nach einem der Ansprüche 1 bis 20, **dadurch gekennzeichnet, dass** das Gehäuse einen Deckel (17) mit einer diesen umgebenden radialen Dichtung (18) umfasst.
